# FASCICULE DE BREVET EUROPEEN

(11) **EP 0 989 932 B1**
(45) Date de publication et mention de la délivrance du brevet: **28.05.2003**
(21) Numéro de dépôt: 99911900.1
(22) Date de dépôt: 08.04.1999
(51) Int. Cl.: B29C 70/08, B29C 53/06, B29D 24/00, E05D 1/02

(54) **PROCEDE DE REALISATION D'UN PANNEAU COMPOSITE DU TYPE SANDWICH AVEC UNE CHARNIERE D'ARTICULATION, ET PANNEAU OBTENU PAR UN TEL PROCEDE**
VERFAHREN ZUM HERSTELLEN EINER SANDWICHVERBUNDPLATTE MIT EINEM SCHARNIERGELENK UND SO HERGESTELLTE PLATTE
METHOD FOR PRODUCING A SANDWICH-TYPE COMPOSITE PANEL WITH ARTICULATION HINGE, AND RESULTING PANEL

(30) Priorité: 10.04.1998 FR 9804556
(43) Date de publication de la demande: 05.04.2000
(73) Titulaire: PEGUFORM FRANCE, 27950 Saint Marcel (FR)
(72) Inventeur: HOCHET, Nicolas, F-49500 La Chapelle sur Oudon (FR); VENDANGEOT, Francis, F-44110 Châteaubriant (FR)
(74) Mandataire: Le Forestier, Eric
(86) Numéro de dépôt international: FR9900811
(87) Numéro de publication internationale: WO99052702

(56) Documents cités:
- EP-A- 0 311 931
- WO-A-93/16868
- DE-A- 3 813 104
- DE-A- 4 340 381
- DE-A- 4 442 767
- DE-A- 19 612 127
- FR-A- 2 711 573
- GB-A- 2 061 871
- US-A- 4 194 313
- US-A- 5 132 156
- PATENT ABSTRACTS OF JAPAN vol. 095, no. 006, 31 juillet 1995 (1995-07-31) & JP 07 081628 A (TOYOTA MOTOR CORP), 28 mars 1995 (1995-03-28) & DATABASE WPI Derwent Publications Ltd., London, GB; AN 95-158651 & JP 07 081628 A (TOYOTA), 28 mars 1995 (1995-03-28) & JP 07 081628 A (TOYOTA) 28 mars 1995 (1995-03-28)

## Description

La présente invention concerne de manière générale des panneaux de structure composite de type sandwich à âme alvéolaire notamment pour véhicules automobiles, et plus particulièrement un procédé pour réaliser un tel panneau pourvu d'une chamière.

Les matériaux de type sandwich à âme alvéolaire présentent des caractéristiques très importantes eu égard à leur poids.

De manière classique, la construction de tels panneaux consiste à emprisonner par collage ou soudure une âme alvéolaire de faibles caractéristiques mécaniques entre deux peaux présentant une épaisseur beaucoup plus failble que celle de l'âme alvéolaire mais possédant d'excellentes caractéristiques mécaniques.

En outre, on connaît du document FR 2 711 573 appartenant à la Demanderesse, un procédé pour réaliser un panneau de structure composite du type sandwich à âme alvéolaire, selon lequel on réalise ledit panneau en une seule étape, par pressage dans un moule à froid, d'un empilement constitué d'au moins une première peau en matériau thermoplastique renforcé estampable, d'une âme alvéolaire en matériau thermoplastique, d'une deuxième peau en matériau thermoplastique renforcé estampable, et d'une première couche de revêtement exteme en matériau tissé ou non tissé, lesdites peaux étant préalablement chauffées hors du moule à une température de ramollissement

Un tel procédé est particulièrement avantageux dans le fait qu'il permet en une seule opération de générer la cohésion entre les différentes couches de structure composite et de conformer ledit panneau.

Le panneau ainsi réalisé conserve toutes les propriétés mécaniques dûes à la structure sandwich à âme alvéolaire.

Les panneaux de structure composite du type sandwich à âme alvéolaire présentent des caractéristiques de rigidité suffisante permettant de renforcer structurellement des structures mécaniques soumises à des contraintes importantes sans pour cela trop les alourdir. De tels panneaux sont alors couramment utilisés dans les secteurs de la construction navale, aéronautique et ferroviaire.

Toutefois, de tels panneaux sont rarement utilisés tel quels.

Pour augmenter au maximum la fonctionnalité de tels panneaux, il est connu d'y ajouter notamment des charnières pour pouvoir monter de façon articulée ces panneaux sur d'autres panneaux. Les chamières sont des pièces rapportées, fixées sur ces panneaux par collage, soudage, rivetage ou autres techniques de fixation.

L'opération de fixation de ces charnières sur lesdits panneaux composites à structure sandwich, est réalisée en opération de reprise, après le formage de ces derniers. Cette opération de reprise nécessite un poste de travail automatisé ou non supplémentaire, ce qui augmente notamment le temps de fabrication et ainsi le coût de fabrication des pièces finies.

En outre, le fait de rapporter sur un panneau composite du type sandwich des pièces extemes est une source de défaut de qualité, et représente là encore un coût supplémentaire de réalisation.

Le document JP-A-07 081 628 montre un panneau composite à structure sandwich pourvu d'une charnière constituée par la jonction directe des deux peaux selon une bande charnière, l'âme alvéolaire étant interrompue par cette bande.

Pour pallier les inconvénients de l'état de la technique précité, l'invention propose un nouveau procédé pour réaliser un panneau composite à structure sandwich pourvu d'une chamière, qui est simple à mettre en oeuvre, ne nécessite pas une opération supplémentaire de reprise et permet donc de fabriquer de telles pièces à un coût relativement modéré.

Plus particulièrement, selon l'invention, il est prévu un procédé pour réaliser un panneau composite à structure sandwich pourvu d'une charnière, panneau comprenant un empilement d'au moins une première peau en matériau thermoplastique renforcé, une âme alvéolaire en matériau thermoplastique et une deuxième peau en matériau thermoplastique renforcé, procédé selon lequel on forme ledit panneau par pressage dudit empilement à une pression comprise entre 10.10⁵ et 30.10⁵ Pa, les première et deuxième peaux étant préalablement chauffées à une température de ramollissement

Ce procédé est caractérisé en ce qu'après avoir formé ledit panneau, on réalise à un endroit déterminé dudit panneau une incision de manière à couper une des première et deuxième peaux et l'âme alvéolaire sensiblement sur toute son épaisseur en laissant l'autre peau intacte de sorte qu'elle forme à cet endroit, la charnière d'articulation entre deux parties du panneau incisé.

On entend ici par l'expression « sensiblement sur toute son épaisseur », le fait que l'âme alvéolaire est coupée sur une distance comprise entre 80 et 100 % de son épaisseur totale.

Le procédé selon l'invention va à l'encontre des préjugés de l'homme du métier selon lequel il ne doit pas porter atteinte à l'intégrité du matériau sandwich pour qu'il garde toutes ses capacités mécaniques, et selon lequel une peau en matériau thermoplastique renforcé avec des fibres de verre ou de carbone ou encore naturelle est trop fragile pour constituer une chamière structurelle, ceci étant dû à l'utilisation des fibres.

En effet, il est connu d'utiliser un matériau thermoplastique pour réaliser une charnière peu ou pas structurelle mais selon l'idée de l'homme du métier, l'addition dans un matériau thermoplastique de fibres de verre le rend trop fragile pour l'utiliser à cette fonction.

Selon d'autres caractéristiques non limitatives et avantageuses du procédé selon l'invention, préalablement au formage dudit panneau, on chauffe un pré-assemblage constitué par l'empilement d'au moins la première peau, de l'âme alvéolaire et de la seconde peau à des températures telles que les première et deuxième peaux présentent lors du formage dudit panneau, une température de formage comprise entre 160 et 200°C.

Les première et seconde peaux sont constituées d'un tissu de fibres de verre et d'un matériau thermoplastique. Le matériau thermoplastique peut être une polyoléfine et de préférence du polypropylène.

L'âme alvéolaire présente avantageusement une structure d'alvéoles ouvertes du type structure tubulaire ou nid d'abeilles constituée principalement de polyoléfine et de préférence de polypropylène.

Bien entendu, on peut également selon l'invention utiliser une âme alvéolaire à structure d'alvéoles fermées du type mousse.

L'invention propose également un panneau de structure composite de type sandwich, comportant un empilement d'au moins une première peau, d'une âme alvéolaire en matériau thermoplastique et d'une deuxième peau, ledit panneau étant pourvu d'une chamière, réalisé selon le procédé précité.

La description qui va suivre en regard des dessins annexés donnés à titre d'exemples non limitatifs, fera bien comprendre en quoi consiste-l'invention et comment elle peut être réalisée.

Sur les dessins annexés :
- la figure 1 est un premier mode de réalisation d'un panneau composite à structure sandwich comportant une charnière, réalisé selon le procédé selon l'invention,
- la figure 2 représente une étape de mise en oeuvre d'un mode de réalisation du procédé selon l'invention,
- la figure 3 représente une vue de côté d'une double lame crantée utilisée dans le procédé selon l'invention,
- la figure 4 représente un montage d'essai d'un panneau composite à structure sandwich pourvu d'une chamière d'articulation, réalisé selon le procédé conforme à l'invention,

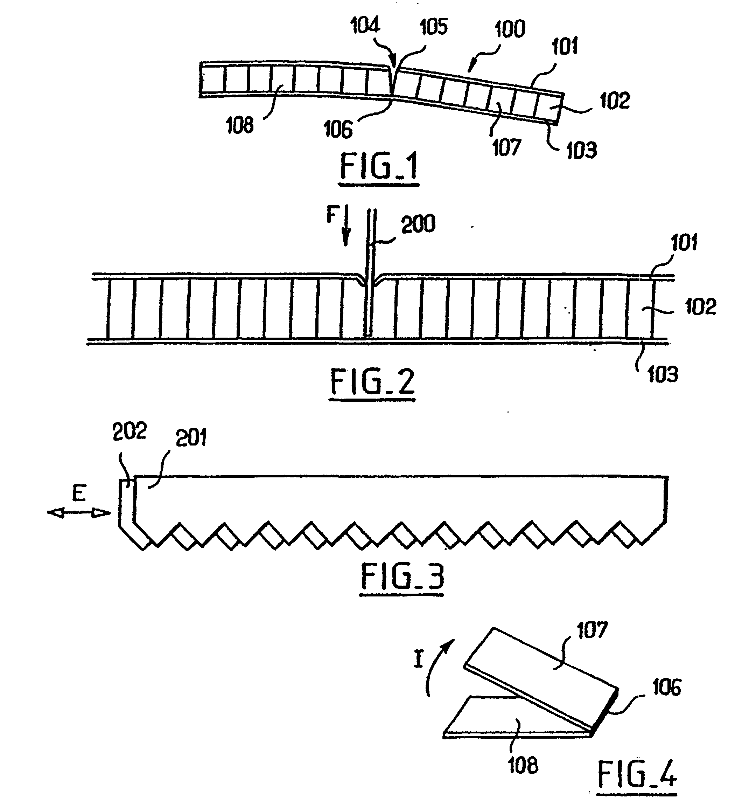

Sur la figure 1, on a représenté un panneau 100 de structure composite du type sandwich comprenant un empilement d'une première peau 101 réalisée en matériau thennoplastique renforcé, d'une âme alvéolaire 102 et d'une deuxième peau 103 réalisée en matériau thermoplastique renforcé.

Le renforcement des première et deuxième peaux 101, 103 est réalisé par des fibres, par exemple des fibres de verre, de carbone ou encore des fibres naturelles.

Ces première et deuxième peaux 102, 103 peuvent être avantageusement constituées par un tissu de fibres de verre et d'un matériau thermoplastique.

Le matériau thermoplastique est une polyoléfine et de préférence du polypropylène.

L'âme alvéolaire 102 présente ici une structure à alvéoles ouverte du type structure tubulaire ou nid d'abeilles constituée principalement de polyoléfine et de préférence de polypropytène. Bien entendu, on peut prévoir d'utiliser une âme alvéolaire à structure d'alvéoles fermées du type mousse.

Ce panneau 100 peut être revêtu sur un ou deux côté(s) d'une couche de revêtement exteme (ici non représentée) en matériau tissé ou non tissé (du type moquette).

Selon le procédé de réalisation d'un tel panneau, le panneau 100 est formé par pressage dans un moule de formage à froid, de l'empilement de la première peau 101, de l'âme alvéolaire 102 et de la seconde peau 103 à une pression comprise entre 10.10⁵ et 30.10⁵ Pa.

Les première et deuxième peaux 101, 103 sont préalablement chauffées de façon à les rendre malléables.

De manière avantageuse, pour ramollir les première et seconde peaux, on chauffe un pré-assemblage constitué par l'empilement d'au moins la première peau 101, l'âme alvéolaire 102, et la deuxième peau 103 de sorte que les première et deuxième peaux présentent lors du formage dudit panneau une température de formage comprise entre 160 et 200°C environ et ici de l'ordre de 180°C.

Comme le montre la figure 1, le panneau 100 comporte à un endroit déterminé ici dans une région sensiblement centrale, une incision 104.

Cette incision 104 est réalisée après le formage du panneau 100, plus particulièrement 10 à 30 secondes après son formage, de manière à couper la première peau 101 et l'âme alvéolaire 102 sensiblement sur toute son épaisseur en laissant intacte la deuxième peau 103 de sorte qu'elle forme à l'endroit déterminé, une chamière 106 entre deux parties 107, 108, du panneau incisé.

Pour réaliser une incision, on utilise avantageusement une lame crantée 200 (voir figure 2) dont la taille des crans et la hauteur de lame sont fonction de l'épaisseur du matériau sandwich à couper.

La lame crantée 200 est mobile de façon à se déplacer, par rapport au plan dudit panneau 100 formé tout d'abord verticalement pour couper les fibres de la première peau 101 supérieure sans écraser le matériau sandwich à cet endroit, puis elle se déplacera verticalement et horizontalement selon un mouvement de va et vient par rapport au plan dudit panneau pour couper l'âme alvéolaire sur toute son épaisseur.

L'intervalle de temps de 10 à 30 secondes entre l'opération de formage et l'opération d'incision du panneau permet au panneau thermoformé de se refroidir suffisamment pour que la lame crantée 200 puisse couper correctement les fibres de ladite peau sans écraser le matériau sandwich.

On peut prévoir que l'incision du panneau 100 réalisée à l'aide de la lame 200 s'effectue dans le moule de formage ou hors du moule de formage. Lorsque l'opération s'effectue dans le moule de formage, la lame crantée 200 est montée sur une partie mobile d'une partie du moule qui se déplacera après le formage du panneau par rapport au moule pour effectuer l'opération d'incision du panneau.

Selon une variante du procédé de réalisation dudit panneau, on peut utiliser deux lames crantées 201 ,202 (voir figure 3) qui vibreront selon la flèche E l'une par rapport à l'autre tout en se déplaçant verticalement par rapport au plan dudit panneau pour réaliser l'incision 104 telle que représentée sur la figure 1.

L'utilisation de deux lames crantées est particulièrement avantageuse pour couper une peau épaisse ou difficile à couper du fait de l'utilisation de fibres et de son type de tissage.

Des essais sur un tel panneau à chamière d'articulation in situ, ont été réalisés à l'aide d'éprouvettes dont une est représentée sur la figure 4. Les essais ont été réalisés d'une part avec des panneaux comportant des peaux constituées par un tissu de fibres de verre noyées dans du polypropylène présentant un grammage de 915 g/m² et une âme alvéolaire du type nid d'abeilles réalisée en polypropylène, et d'autre part avec des panneaux dont les première et deuxième peaux présentent un grammage de 1000 g/m².

La lame crantée utilisée pour réaliser l'incision dans ces panneaux, présente une épaisseur de 0,5 mm.

Juste après la compression, le moule de formage a été ouvert rapidement pour introduire et fixer ladite lame sur un poinçon puis le moule a été refermé. Les temps d'ouverture et de fermeture ont permis aux panneaux formés de se refroidir suffisamment.

Les éprouvettes (dont une est représentée sur la figure 4), ont été testées en fatigue en réalisant des cycles d'ouverture et de fermeture selon la flèche I, l'amplitude d'ouverture variant de 3 degrés minimum à 45 degrés maximum.

Selon les résultats d'essai obtenus, certaines éprouvettes se sont déchirées au niveau de la peau formant charnière après 3 000 cycles du fait qu'une amorce de rupture avait été provoquée lors du montage des éprouvettes sur le banc d'essais.

Toutefois, la moquette qui recouvrait les peaux desdites éprouvettes retenait encore les deux parties de panneaux entre eux.

Les éprouvettes qui n'ont pas été abîmées lors de leur montage sur le banc d'essais ont tenu 30 000 cycles sans rupture. Cela correspond environ à huit ouvertures par jour pendant dix ans.

Le procédé précité et décrit, présente les avantages suivants :
- il permet de réaliser une charnière in situ dans un panneau composite de structure sandwich sans opération de reprise, sans utiliser de pièce supplémentaire, ou de matière additionnelle du type colle pour fixer la pièce supplémentaire, ce qui permet de diminuer considérablement le coût de fabrication de la pièce finie.
- ce procédé permet de s'affranchir de toute machine supplémentaire du type machine de collage ou de soudure,
- il permet de réaliser le panneau avec sa charnière intégrée en un temps plus court que celui nécessaire à la réalisation du panneau comportant une charnière rapportée.

La présente invention n'est nullement limitée aux modes de réalisation décrits et représentés, mais l'homme du métier saura y apporter toute variante comprise dans le cadre défini par les revendications.

## Revendications

1. Procédé pour réaliser un panneau (100) composite à structure sandwich pourvu d'une chamière (106), ledit panneau comprenant un empilement d'au moins une première peau (101) en matériau thermoplastique renforcé, une âme alvéolaire (102) en matériau thermoplastique, et une deuxième peau (103) en matériau thermoplastique renforcé, procédé selon lequel on forme ledit panneau (100) par pressage dudit empilement à une pression comprise entre 10.10.⁵ et 30.10⁵ Pa, les première et deuxième peaux (101, 103) étant préalablement chauffées à une température de ramollissement, **caractérisé en ce qu'**après avoir formé ledit panneau, on réalise à un endroit déterminé de ce demier, une incision de manière à couper une (101) des première et deuxième peaux (101, 103) et l'âme alvéolaire sensiblement sur toute son épaisseur en laissant l'autre peau (103) intacte de sorte qu'elle forme à cet endroit la charnière (106) entre deux parties (107, 108) dudit panneau incisé (100).

2. Procédé selon la revendication 1, **caractérisé en ce que** l'incision (104) dans ledit panneau (100) est réalisée 10 à 30 secondes environ après le formage de ce dernier.

3. Procédé selon l'une des revendications 1 ou 2, **caractérisé en ce que** l'incision (104) est réalisée à l'aide d'une lame crantée (200) qui, par rapport au plan dudit panneau (100), se déplace tout d'abord uniquement verticalement pour s'enfoncer dans la peau (101) de ce dernier, puis se déplace verticalement et horizontalement selon un mouvement de va et vient pour couper l'âme alvéolaire (102).

4. Procédé selon l'une des revendications 1 ou 2, **caractérisé en ce que** l'incision (104) est réalisée à l'aide de deux lames crantées juxtaposées (201, 202) qui vibrent l'une par rapport à l'autre tout en descendant verticalement par rapport au plan dudit panneau (100) pour s'enfoncer dans ce dernier en coupant une peau (101) et l'âme alvéolaire (102) de celui-ci.

5. Procédé selon l'une des revendications 1 à 4, **caractérisé en ce que** l'incision (104) est réalisée dans le panneau formé encore dans le moule de formage.

6. Procédé selon l'une des revendications 1 à 4, **caractérisé en ce que** l'incision (104) est réalisée dans le panneau formé hors du moule de formage.

7. Procédé selon l'une des revendications précédentes, **caractérisé en ce que** préalablement au formage dudit panneau (100) on chauffe un pré-assemblage constitué par l'empilement d'au moins la première peau (101), de l'âme alvéolaire (102) et de la deuxième peau (103).

8. Procédé selon l'une des revendications 1 à 7, **caractérisé en ce que** lors du formage dudit panneau (100) les première et deuxième peaux (101, 103) présentent une température de formage comprise entre 160 et 200°C environ.

9. Procédé selon l'une des quelconque des revendications 1 à 8, **caractérisé en ce que** les première et deuxième peaux (101, 103) sont constituées d'un tissu de fibres de verre et d'un matériau thennoplastique.

10. Procédé selon la revendication 9, **caractérisé en ce que** le matériau thermoplastique est une polyoléfine de préférence du polypropylène.

11. Procédé selon l'une quelconque des revendications 1 à 10, **caractérisé en ce que** l'âme alvéolaire (102) du panneau (100) présente une structure d'alvéoles ouvertes du type structure tubulaire ou nid d'abeilles, constituée printxpalement de polyoléfine et de préférence de polypropylène.

12. Panneau (100) de structure composite de type sandwich comportant un empilement d'au moins une première peau (101), en matériau thermoplastique renforcé, d'une âme alvéolaire (102) en matériau thermoplastique et d'une deuxième peau (103) en matériau thermoplastique renforcé, le panneau étant pourvu d'au moins une charnière, réalisé suivant le procédé selon l'une quelconque des revendications 1 à 11.

## Claims

1. A method of making a composite panel (100) of sandwich structure and provided with a hinge (106), said panel comprising a stack made up of at least one first skin (101) made of a reinforced thermoplastics material, of a cellular core (102) made of a reinforced thermoplastics material, and of a second skin (103) made of a thermoplastics material, in which method said panel (100) is formed by pressing said stack at a pressure lying in the range 10 × 10⁵ Pa to 30 × 10⁵ Pa, the first and second skins (101, 103) being preheated to a softening temperature, said method being **characterized in that**, after said panel has been formed, an incision is made at a determined place in said panel so as to cut through one (101) of the first and second skins (101, 103), and substantially through the entire thickness of the cellular core, while leaving the other skin (103) intact so that it forms, at said place, the hinge (106) between two portions (107, 108) of the incised panel (100).

2. A method according to claim 1, **characterized in that** the incision (104) in said panel (100) is made approximately in the range 10 seconds to 30 seconds after said panel has been formed.

3. A method according to claim 1 or 2, **characterized in that** the incision (104) is made by means of a serrated blade (200) which, relative to the plane of said panel (100), firstly moves vertically only so as to penetrate into the skin (101) of said panel, and then moves vertically and horizontally back-and-forth so as to cut through the cellular core (102).

4. A method according to claim 1 or 2, **characterized in that** the incision (104) is made by means of two juxtaposed serrated blades (201, 202) which vibrate relative to each other while simultaneously moving downwards vertically relative to the plane of said panel (100) so as to penetrate into said panel by cutting through a skin (101) and through the cellular core (102) thereof.

5. A method according to any one of claims 1 to 4, **characterized in that** the incision (104) is made in the formed panel while said panel is still in the forming mold.

6. A method according to any one of claims 1 to 4, **characterized in that** the incision (104) is made in the formed panel outside the forming mold.

7. A method according to any preceding claim, **characterized in that**, prior to forming said panel (100) a pre-assembly constituted by the stack of at least the first skin (101), of the cellular core (102) and of the second skin (103) is heated.

8. A method according to any one of claims 1 to 7, **characterized in that**, while said panel (100) is being formed, the first and second skins (101, 103) have a forming temperature lying approximately in the range 160°C to 200°C.

9. A method according to any one of claims 1 to 8, said method being **characterized in that** the first and second skins (101, 103) are made up of glass fiber fabric and of a thermoplastics material.

10. A method according to claim 9, **characterized in that** the thermoplastics material is a polyolefin and preferably polypropylene.

11. A method according to any one of claims 1 to 10, **characterized in that** the cellular core (102) of the panel (100) has an open-celled structure of the tubular or honeycomb cell type.

12. A panel (100) of sandwich-type composite structure and comprising a stack made up of at least a first skin (101) made of a reinforced thermoplastics material, of a cellular core (102) made of a thermoplastics material, and of a second skin (103) made of a reinforced thermoplastics material, the panel being provided with at least one hinge, and being made by implementing the method according to any one of claims 1 to 11.

## Patentansprüche

1. Verfahren zur Herstellung einer Verbundplatte (100) mit Sandwichstruktur, die mit einem Scharnier (106) versehen ist, wobei die Platte einen Stapel aus wenigstens einer ersten Außenschicht (10) aus verstärktem thermoplastischem Material, einer zellenartigen Mittelschicht (102) aus thermoplastischem Material und einer zweiten Außenschicht (103) aus verstärktem thermoplastischem Material umfasst, gemäß welchem Verfahren man die Platte (100) durch Verdichtung des Stapels bei einem Druck zwischen 10·10⁵ und 30·10⁵ Pa bildet, wobei die erste und die zweite Außenschicht (101, 103) vorab auf eine Erweichungstemperatur erwärmt werden, **dadurch gekennzeichnet, dass** man, nachdem man die Platte gebildet hat, an einer bestimmten Stelle dieser Letzteren einen Einschnitt vornimmt dergestalt, dass eine (101) der ersten und der zweiten Außenschicht (101, 103) und die zellenartige Mittelschicht im wesentlichen über ihre gesamte Dicke durchschnitten werden und die andere Außenschicht (103) intakt gelassen wird dergestalt, dass sie an dieser Stelle das Scharnier (106) zwischen zwei Teilen (107, 108) der eingeschnittenen Platte (100) bildet,

2. Verfahren nach Anspruch 1, **dadurch gekennzeichnet, dass** der Einschnitt (104) in die Platte (100) ungefähr 10 bis 30 Sekunden nach der Bildung dieser Letzteren vorgenommen wird.

3. Verfahren nach einem der Ansprüche 1 oder 2, **dadurch gekennzeichnet, dass** der Einschnitt (104) mit Hilfe einer mit Kerben versehenen Schneide (200) vorgenommen wird, die bezogen auf die ebene Fläche der Platte (100) sich zunächst allein vertikal verschiebt, um in die Außenschicht (101) dieser Letzteren einzudringen, sich dann vertikal und horizontal gemäß einer hin- und hergehenden Bewegung verschiebt, um die zelienartige Mittelschicht (102) zu durchschneiden.

4. Verfahren nach einem der Ansprüche 1 oder 2, **dadurch gekennzeichnet, dass** der Einschnitt (104) mit Hilfe von zwei nebeneinanderliegenden, mit Kerben versehenen Schneiden (201, 202) vorgenommen wird, die eine bezogen auf die andere vibrieren, wobei sie sich vertikal bezogen auf die ebene Fläche der Platte (100) verschieben, um in diese Letztere einzudringen, wobei eine Außenschicht (101) und die zellenartige Mittelschicht (102) von jener durchschnitten werden.

5. Verfahren nach einem der Ansprüche 1 bis 4, **dadurch gekennzeichnet, dass** der Einschnitt (104) in der gebildeten Platte noch in der Herstellungsform vorgenommen wird.

6. Verfahren nach einem der Ansprüche 1 bis 4, **dadurch gekennzeichnet, dass** der Einschnitt (104) in der gebildeten Platte außerhalb der Herstellungsform vorgenommen wird.

7. Verfahren nach einem der vorangegangenen Ansprüche, **dadurch gekennzeichnet, dass** man vor der Bildung der Platte (100) eine eine Vorstufe darstellende Zusammenstellung, die aus dem Stapel aus wenigstens der ersten Außenschicht (101), der zellenartigen Mittelschicht (102) und der zweiten Außenschicht (103) gebildet wird, erwärmt.

8. Verfahren nach einem der Ansprüche 1 bis 7, **dadurch gekennzeichnet, dass** während der Bildung der Platte (100) die erste und die zweite Außenschicht (101, 103) eine Fließtemperatur zwischen ungefähr 160 und 200°C aufweisen.

9. Verfahren nach einem der Ansprüche 1 bis 8, **dadurch gekennzeichnet, dass** die erste und die zweite Außenschicht (101, 103) aus einem Glasfasergewebe und einem thermoplastischen Material gebildet werden.

10. Verfahren nach Anspruch 9, **dadurch gekennzeichnet, dass** das thermoplastische Material ein Polyolefin, vorzugsweise Polypropylen ist.

11. Verfahren nach einem der Ansprüche 1 bis 10, **dadurch gekennzeichnet, dass** die zellenartige Mittelschicht (102) der Platte (100) eine Struktur von offenen Zellen vom röhrenartigen oder Bienenwaben-Strukturtyp, die hauptsächlich aus Polyolefin und vorzugsweise Polypropylen gebildet wird, aufweist.

12. Platte (100) mit Verbundstruktur vom Sandwich-Typ, umfassend einen Stapel aus wenigstens einer ersten Außenschich.t (101) aus verstärktem thermoplastischem Material, einer zellenartigen Mittelschicht (102) aus thermoplastischem Material und einer zweiten Außenschicht (103) aus verstärktem thermoplastischem Material, wobei die Platte mit wenigstens einem Scharnier versehen ist und gemäß dem Verfahren nach einem der Ansprüche 1 bis 11 hergestellt wird.
